# EUROPEAN PATENT APPLICATION

(11) **EP 3 118 530 A1**
(43) Date of publication of application: **18.01.2017**
(21) Application number: 16179219.7
(22) Date of filing: 13.07.2016
(51) Int. Cl.: F24D 11/02, F24D 19/00, F24D 19/10

(54) **HYBRID HEAT PUMP SYSTEM**

(30) Priority: 17.07.2015 KR 20150101676
(71) Applicant: Seyeon Corporation, Cheongju-si 28145 (KR)
(72) Inventor: KIM, Sung Bae, 28467 Cheongju-si (KR)
(74) Representative: Zardi, Marco

(57) **Abstract**

A hybrid heat pump system comprise a geothermal heat pump system, an air source heat pump system, and a buffer heat-storage configured to exchange a heat with the geothermal heat pump system and the air source heat pump system and to store therein the exchanged heat. The buffer heat-storage comprises fluid circulation lines fluid-coupled to and between an air heater and the buffer heat-storage to realize a circulation of a refrigerant fluid therebetween, which receives a heat energy from the buffer heat-storage, wherein the air heater is configured to heat the air thereto from an outdoor using the refrigerant fluid.

## Description

### CROSS-REFERENCE TO RELATED APPLICATION

This application claims the benefit of Korea Patent Application No. 10-2015-0101676 filed on July 17, 2015, the entire content of which is incorporated herein by reference for all purposes as if fully set forth herein.

### BACKGROUND

### Field of the Present Disclosure

The present disclosure relates to a hybrid heat pump system using geothermal and air source energies. More particularly, the present disclosure relates to a hybrid heat pump system to heat an air in an air source heat pump using an energy generated from a geothermal heat pump to improve a heating efficiency and to suppress failure of the air source heat pump.

### Discussion of the Related Art

A heat pump is a thermodynamic device for transferring heat from a source cooled by the heat pump by withdrawing heat from this source (or heat sink), in contact with an evaporator of the pump, to a source heated by the pump by evacuation of heat to this source (or heat source) in contact with a condenser of the pump. A pump also comprises a compressor powered by an external energy source that makes possible the transfer of heat from the heat sink to the heat source, in accordance with the second law of thermodynamics and comprises an expander for reducing the pressure imposed on the fluid, by the compressor. The condenser and the evaporator, which are the heat exchangers of the pump, are connected by two refrigerant fluid transport branches or lines, forming a closed circuit comprising, in series in the circuit, in one of the branches the compressor and, in series in the circuit, in the other branch, the expander. The closed fluidic circuit contains, in a leaktight manner, refrigerant fluid, made to flow in the circuit by the compressor and circulating in particular from the evaporator to the condenser, through the compressor, and circulating from the condenser to the evaporator, through the expander. The pump is adapted for withdrawing heat from the heat sink, by evaporation of this fluid in the evaporator, for transporting heat to the heat source from the evaporator to the condenser through the compressor, and giving up this heat to the heat source, by condensation of the fluid in the condenser.

When the heat pump system functions as a heater, the evaporator absorbs a heat energy from an ambient air and then an evaporated refrigerant is compressed by the compressor and then the compressed refrigerant with a high temperature and pressure is condensed by the condenser indoors to discharge a heat. To the contrary, when the heat pump system functions as a cooler, the refrigerant passing through the compressor discharges a heat in the condenser and then the refrigerant passes through a pressure reduction device and then absorbs a heat in the evaporator to evaporate therein to cool the ambient air.

The heat pump system may include a geothermal heat pump, and an air source heat pump. The geothermal heat pump may heat or cool the indoor using a geothermal energy to save the power by up to 40% over the conventional cooling and heating apparatus.

The geothermal heat pump may vary depending on the type of the geothermal heat exchanger. The geothermal heat exchanger may typically include a vertical closed geothermal heat exchanger. In order to install the vertical closed geothermal heat exchanger, a vertical bore should be drilled by at least 150m. Thus, the installation cost may be larger.

Further, the air source heat pump may absorb an energy from a cold ambient air on winter and may evaporate the refrigerant using the absorbed energy. This may lead to a failure of the air source heat pump.

A prior art document is as follows: Korean patent number 10-0780460.

### SUMMARY

In order to solve the above problems, there is a need for a combination of the geothermal heat pump and air source heat pump to save the installation cost and improve the heat efficiency and to suppress the failure of the air source heat pump on winter.

From considerations of the above situations, the present disclosure provides a hybrid heat pump system including both the geothermal heat pump and air source heat pump.

Further, the present disclosure provides a hybrid heat pump system to employ the geothermal heat pump in a heating mode to directly use the heat from the geothermal heat exchanger or to preheat the cold air from the ambient in the air source heat pump using a heat storage storing therein the heat from the geothermal heat exchanger. This may suppress the failure of the air source heat pump on winter.

In an aspect of the present disclosure, there is provided a hybrid heat pump system comprising: a geothermal heat pump system configured to use a first fluid as a heat exchange medium thereof; an air source heat pump system configured to use a second fluid as a heat exchange medium thereof; a buffer heat-storage configured to exchange a heat with the geothermal heat pump system and the air source heat pump system and to store therein the exchanged heat, wherein the buffer heat-storage supplies a heat energy to a load; and a controller configured to control the air source heat pump system based on a required heat level of the load, wherein the geothermal heat pump system comprises: a geothermal heat exchanger configured to collect a geothermal energy using a circulating water; a geothermal heat pump apparatus configured to cool the first fluid using the collected geothermal energy from the geothermal heat exchanger; first circulation lines fluid-coupled to and between the geothermal heat exchanger and the geothermal heat pump apparatus to realize a circulation of the circulating water between the geothermal heat exchanger and the geothermal heat pump apparatus; and second circulation lines fluid-coupled to and between the geothermal heat pump apparatus and the buffer heat-storage to realize a circulation of the first fluid between the geothermal heat pump apparatus and the buffer heat-storage, wherein the air source heat pump system comprises: an air heater configured to heat an air from an outdoor and to output the heated air; an air source heat pump apparatus configured to heat or cool the second fluid using the outputted heated air, wherein the air source heat pump apparatus is located in a closed indoor to suppress the air outputted threrefrom from returning thereto, wherein the air source heat pump apparatus has an air discharge unit fluid-coupled to the outdoor to discharge the air from the indoor to the outdoor, third circulation lines fluid-coupled to and between the air source heat pump apparatus and the buffer heat-storage to realize a circulation of the second fluid between the air source heat pump apparatus and the buffer heat-storage; and a control door configured to control the air flow between the indoor and the outdoor, wherein the buffer heat-storage is configured to temporarily store therein the first fluid and the second fluid, wherein the buffer heat-storage comprises fourth circulation lines fluid-coupled to and between the air heater and the buffer heat-storage to realize a circulation of a third fluid as a heat exchange medium between the air heater and the buffer heat-storage, wherein the third fluid receives a heat energy from the buffer heat-storage, wherein the air heater is configured to heat the air from the outdoor using the third fluid, wherein when the third fluid is circulating in and along the fourth circulation lines, the controller is configured to close the control door.

In one embodiment, the controller is configured to control a flow rate of the third fluid circulating in and along the fourth circulation lines, based on a temperature of the air entered into the air heater.

In one embodiment, the controller is configured to control the air heater when the air source heat pump apparatus operates.

In one embodiment, the fourth circulation lines are adjacent to the third circulation lines in order to suppress a freeze-burst of the fourth circulation lines.

In one embodiment, the air source heat pump apparatus is directly fluid-coupled to the air heater such that the air outputted from the air heater is not returned to the air heater but is fed to the air source heat pump apparatus.

In an aspect of the present disclosure, there is provided a method for control the above-defined hybrid heat pump system, wherein the method comprises: (a) determining, by the controller, a required heat level of the load; (b) controlling, by the controller, an operation of the geothermal heat pump system, based on the required heat level; and (c) controlling, by the controller, a heat level to be supplied from the air source heat pump system to the load, based on the required heat level.

In one embodiment, the (c) operation comprises: obtaining, by the controller, a temperature of the air entered into the air heater; and controlling a flow rate of the third fluid circulating in and along the fourth circulation lines, based on the temperature.

### BRIEF DESCRIPTIONS OF THE DRAWINGS

The accompanying drawings included to provide a further understanding of the present disclosure illustrate embodiments of the present disclosure.
FIG. 1 shows a bock diagram of a heat pump system in one embodiment of the present disclosure.
Fig. 2 shows a high level diagram of an air heater in one embodiment of the present disclosure.
FIG. 3 shows a flow chart of a first control method of the present hybrid heat pump system.
FIG. 4 shows a flow chart of a second control method of the present hybrid heat pump system.

### DETAILED DESCRIPTIONS

Examples of various embodiments are illustrated in the accompanying drawings and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

Example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, s, operations, elements, and/or components, but do not preclude the presence or addition of one or more other features, integers, s, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

Spatially relative terms, such as "beneath," "below," "lower," "under," "above," "upper," and the like, may be used herein for ease of explanation to describe one element or feature's relationship to another element s or feature s as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented for example, rotated 90 degrees or at other orientations, and the spatially relative descriptors used herein should be interpreted accordingly.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the following description, numerous specific details are set forth in order to provide a thorough understanding of the present disclosure. The present disclosure may be practiced without some or all of these specific details. In other instances, well-known process structures and/or processes have not been described in detail in order not to unnecessarily obscure the present disclosure.

As used herein, the term "substantially," "about," and similar terms are used as terms of approximation and not as terms of degree, and are intended to account for the inherent deviations in measured or calculated values that would be recognized by those of ordinary skill in the art. Further, the use of "may" when describing embodiments of the present disclosure refers to "one or more embodiments of the present disclosure."

Hereinafter, embodiments of the present disclosure will be described in details with reference to attached drawings.

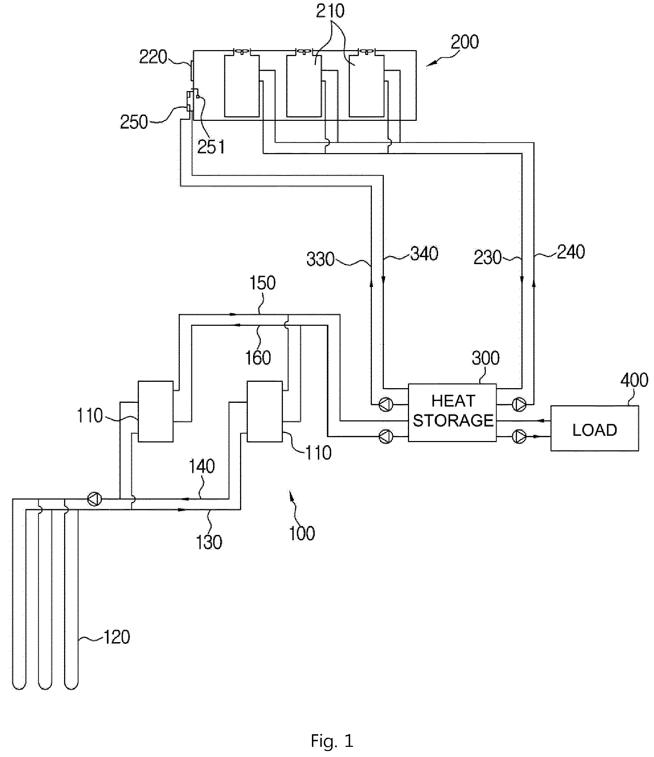

FIG. 1 shows a bock diagram of a heat pump system in one embodiment of the present disclosure.

Referring to FIG. 1, a hybrid heat pump system 10 may include a geothermal heat pump system 100, an air source heat pump system 200, buffer heat-storage 300 and a controller (not shown).

The geothermal heat pump system 100 may be configured to collect a geothermal energy and to supply the geothermal energy as a heating/cooling energy to a load. The geothermal heat pump system 100 may include a geothermal heat pump apparatus 110, a geothermal heat exchanger 120, a geothermal supply line 130, a geothermal return line 140, a geothermal heat pump supply line 150, and a geothermal heat pump return line 160.
The geothermal heat pump apparatus 110 may be configured to heat or cool a first fluid using a geothermal energy collected from the geothermal heat exchanger 120. Thus, the first fluid may cool or heat the load. The first fluid may circulate along the geothermal heat pump system 100. The first fluid may be condensed or evaporated to cool or heat the load during being subjected to compression, condensation, expansion and evaporation by the geothermal heat pump apparatus 110.

The geothermal heat pump apparatus 110 may be fluid-coupled via the geothermal supply line 130 and geothermal return line 140 (referred to as "first circulation lines") to the geothermal heat exchanger 120. The geothermal heat pump apparatus 110 may be configured to cool or heat the first fluid using the geothermal energy collected, for example, using the underground water or geothermal water. Further, the geothermal heat pump apparatus 110 may be fluid-coupled via the geothermal heat pump supply line 150 and geothermal heat pump return line 160 (referred to as "second circulation lines") to the buffer heat-storage 300. The geothermal heat pump apparatus 110 may cool or heat the first fluid to supply a cooling or heating energy to a load 400. Details about a configuration of the geothermal heat pump apparatus 110 are well known to the skilled person to the art.

The geothermal heat exchanger 120 may be configured to collect a geothermal energy, for example, using a geothermal water or underground water circulated therein and to supply the geothermal energy to the geothermal heat pump apparatus 110 to heat or cool the first fluid. The geothermal heat exchanger 120 may be adjacent to the geothermal heat pump apparatus 110. Generally, the geothermal heat exchanger 120 may be implemented as a vertical closed geothermal heat exchanger which may be provided as follows: an installation earth area is secured; a main bore is drilled vertically; a main heat exchange pipe is inserted in the main bore; a plurality of bores is drilled by a depth of 150 to 200m; U shaped pipes are inserted in the bores. The main heat exchange pipe may be coupled to the geothermal supply line 130, and the geothermal return line 140 at opposite both ends thereof. Then, the bores may be grouted with bentonite or cement with water impermeability.

Each of the geothermal supply line 130 and geothermal return line 140 may realize a connection of the geothermal heat pump apparatus 110 and geothermal heat exchanger 120. Along and in the geothermal supply line 130 and geothermal return line 140, the geothermal water or underground water may be circulated. The geothermal supply line 130 may be fluid-coupled to and between an inlet of the geothermal heat pump apparatus 110 and an outlet of the geothermal heat exchanger 120 to supply the geothermal energy from the geothermal heat exchanger 120 to the geothermal heat pump apparatus 110. Further, the geothermal return line 140 may be fluid-coupled to and between an outlet of the geothermal heat pump apparatus 110 and an inlet of the geothermal heat exchanger 120 to return the geothermal water or underground water from the geothermal heat pump apparatus 110 to the geothermal heat exchanger 120.

Each of the geothermal heat pump supply line 150 and geothermal heat pump return line 160 may realize a connection between the geothermal heat pump apparatus 110 and buffer heat-storage 300 to allow a circulation of the first fluid along them. The geothermal heat pump supply line 150 may be fluid-coupled to and between an outlet of the geothermal heat pump apparatus 110 and an inlet of the buffer heat-storage 300 to supply the collected geothermal energy using the first fluid to the buffer heat-storage 300. The geothermal heat pump return line 160 may be fluid-coupled to and between an inlet of the geothermal heat pump apparatus 110 and an outlet of the buffer heat-storage 300 to allow a travel of the first fluid from the buffer heat-storage 300 to the geothermal heat pump apparatus 110.

The air source heat pump system 200 may be configured to use an air from an ambient as a heating/cooling energy to supply a heat energy to the load 400. The air source heat pump system 200 may include an air source heat pump apparatus 210, a control door 220, an air source heat pump supply line 230, an air source heat pump return line 240, an air heater 250, and a temperature sensor 251.

The air source heat pump apparatus 210 may be configured to exchange a heat with an air from an outside thereof using a second fluid, and to supply the second fluid as a heating/cooling energy source to the load 400. It may be noted that the air flowing into the air source heat pump apparatus 210 and used to heat or cool the second fluid and flow out of the air source heat pump apparatus 210 should not back-flow or be returned to the air source heat pump apparatus 210. In order to heat an air flowing into the air source heat pump apparatus 210, the air source heat pump apparatus 210 may include the air heater 250. The air source heat pump apparatus 210 in accordance with the present disclosure may be received in a closed indoor. Only an air discharge line may be fluid-coupled to an outdoor. Alternatively, the air heater 250 may be directly mounted onto the air source heat pump apparatus 210 at an air inlet thereof. As this case, the air source heat pump apparatus 210 may be located outdoor.

The air source heat pump apparatus 210 may include a condenser, an evaporator, and a compressor to realize a heat exchange with an ambient air. Details about the air source heat pump apparatus 210 are well-known to the skilled person to the art.
The control door 220 may be plural. The control door 220 may be configured to control the air flow therethrough. When the air heater 250 is directly mounted on the air source heat pump apparatus 210, it may dispense with the control door 220. Further, the air heater 250 may be plural. The air heater 250 may be configured to heat the air from the ambient thereto using a hot water. When the air heater 250 operates, the control door 220 may be closed. That is, when the air source heat pump system 200 works as a heater, the control door 220 may be closed to suppress the cold ambient air from deteriorating the performance of the air heater 250 and the air source heat pump apparatus 210. Further, when the air heater 250 does not operate, the control door 220 may be opened to allow the ambient air into the indoor in which the air source heat pump apparatus 210 is disposed.

The air source heat pump supply line 230 and air source heat pump return line 240 (referred to as "third circulation lines") may be fluid-coupled to and between the air source heat pump apparatus 210 and buffer heat-storage 300 to realize a circulation of the second fluid between the air source heat pump apparatus 210 and buffer heat-storage 300. The air source heat pump supply line 230 may be fluid-coupled to and between an outlet of the air source heat pump apparatus 210 and an inlet of the buffer heat-storage 300 to supply the second fluid to the buffer heat-storage 300. The air source heat pump return line 240 may be fluid-coupled to and between an inlet of the air source heat pump apparatus 210 and an outlet of the buffer heat-storage 300 to allow the second fluid to return from buffer heat-storage 300 to the air source heat pump apparatus 210.

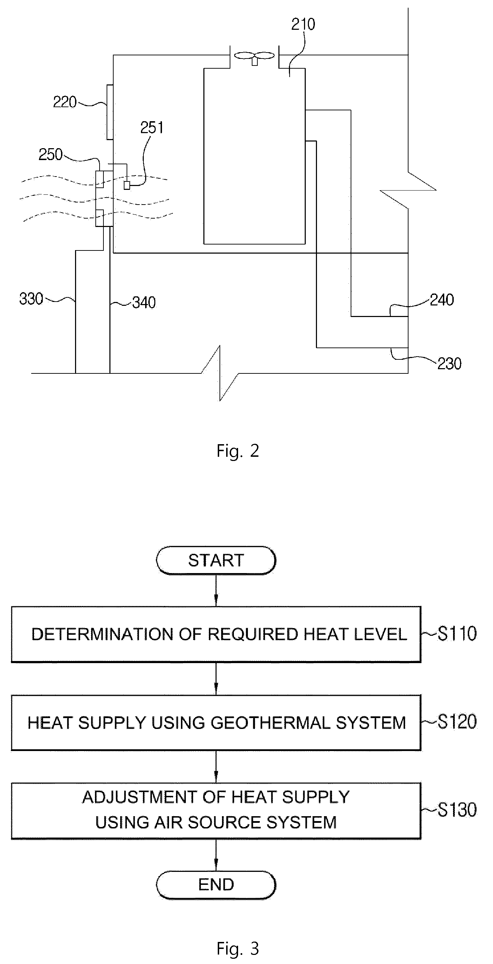

Fig. 2 shows a high level diagram of an air heater in one embodiment of the present disclosure.

Referring to FIG. 2, the air heater 250 may heat the air entered from the ambient into the air source heat pump system. The air heater 250 may heat the air using the third fluid from the buffer heat-storage 300. The air heater 250 may include a temperature sensor 251. The temperature sensor 251 may measure a temperature of the air entered from the ambient into the air source heat pump system. In order that the air inputted into and outputted from the air heater 250 does not interfere with an air flow around the air source heat pump apparatus 210, the air inputted into and outputted from the air heater 250 may be forcibly guided.

The buffer heat-storage 300 may be configured to exchange a heat with the geothermal heat pump system 100 and air source heat pump system 200 and to store therein the exchanged heat. As described above, the buffer heat-storage 300 may be configured to exchange a heat with the geothermal heat pump system 100 via the first fluid circulating in and along the geothermal heat pump supply line 150 and geothermal heat pump return line 160. The buffer heat-storage 300 may be configured to exchange a heat with the air source heat pump system 200 via the second fluid circulating in and along the air source heat pump supply line 230 and air source heat pump return line 240. Further, the buffer heat-storage 300 may be configured to exchange a heat with the load 400 using a fourth fluid.

That is, the buffer heat-storage 300 may receive and store therein the first heat-exchanged fluid from the geothermal heat pump system 100, may receive and store therein the second heat-exchanged fluid from the air source heat pump system 200, and/or may receive and store therein the fourth heat-exchanged fluid from the load 400. Thus, in the buffer heat-storage 300, the first, second, and fourth fluids may be layered depending on temperatures thereof. Thus, the upper layer in the buffer heat-storage 300 may be occupied with a hot fluid while the lower layer in the buffer heat-storage 300 may be occupied with a cold fluid.

The air heater heat-supply line 330 and the air heater heat-return line 340 (referred to as "fourth circulation lines") may be fluid-coupled to and between the air heater 250 and buffer heat-storage 300 to realize a circulation of the third fluid between the air heater 250 and buffer heat-storage 300. The air heater heat-supply line 330 may be fluid-coupled to and between an outlet of the buffer heat-storage 300 and an inlet of the air heater 250 to supply the third fluid from the buffer heat-storage 300 to the air heater 250. The air heater heat-return line 340 may be fluid-coupled to and between an inlet of the buffer heat-storage 300 and an outlet of the air heater 250 to return the third fluid from the air heater 250 to the buffer heat-storage 300. The fourth circulation lines 330 and 340 may be adjacent to the third circulation lines, that is, the air source heat pump line 230 and 240 in order to suppress a freeze-burst of the fourth circulation lines.

The present hybrid heat pump system 10 may be configured to mainly supply the heat from the geothermal heat pump system 100 to the load 400. When the load 400 needs a further energy, the air source heat pump system 200 may additionally supply the heat to the load 400.

In terms of a COP (Coefficient of Performance), the geothermal heat pump system 200 may be higher than the air source heat pump system 300. Thus, the present hybrid heat pump system 10 may be configured such that the geothermal heat pump system 100 acts as a main heater and the air source heat pump system 300 acts as a secondary heater.

Each of the air heater lines 330 and 340 may have an automatic flow rate adjuster configured to control the flow rate therethrough under controls of the controller.

The controller may be configured to control the flow rate of the third fluid circulating in and along the air heater lines 330 and 340 based on the temperature of the air into the air heater 250. That is, based on the flow rate of the third fluid, the temperature of the air into the air source heat pump system 200 may be adjusted.

The controller may obtain the temperature of the air into the air heater 250 from the temperature sensor 251. When the temperature is below a predetermined temperature, the controller may operate the air heater 250. That is, along the air heater lines 330 and 340, the third fluid circulates to heat the air into the air heater 250. In this connection, the predetermined temperature may be about 3 to 5°C. When the temperature of the air into the air source heat pump system 200 is blow the predetermined temperature, the heat efficiency thereof may be deteriorated by up to 35%, thereby leading to the failure of the air source heat pump system 200.

When the temperature of the air into the air heater 250 is below the predetermined temperature, the third fluid circulates along the air heater lines 330 and 340 to heat the air into the air heater 250 to a second predetermined temperature. In this way, the heat efficiency of the air source heat pump system 200 may not be deteriorated, thereby leading to successful operation of the air source heat pump system 200.

Further, when the air heater 250 operates, the controller is configured to close the control door 220 such that only the heated air is present around the air source heat pump system 200.

FIG. 3 shows a flow chart of a first control method of the present hybrid heat pump system. The first method may proceed with an operation S110 to determine a required heat level of the load by the controller.

In an operation S120, the geothermal heat pump system 100 may supply the heat to the load based on the determined required heat level of the load.

In this connection, the controller may be configured to determine whether the heat supply of the geothermal heat pump system 100 meets the determined required heat level of the load. Upon determination that the heat supply of the geothermal heat pump system 100 does not meet the determined required heat level of the load, the controller may be configured to operate the air source heat pump system 200 to feed the heat to the load to meet the determined required heat level of the load.

The method may proceed with an operation S130 where the controller may control a heat level to be supplied from the air source heat pump system to the load, based on the required heat level. In the operation S130, when the heat supply of the air source heat pump system 200 exceeds the determined required heat level of the load, the controller may control the air source heat pump system 200 to reduce the heat supply to the load 400. To the contrary, when the heat supply of the air source heat pump system 200 does not meet the determined required heat level of the load, the controller may control the air source heat pump system 200 to increase the heat supply to the load 400.

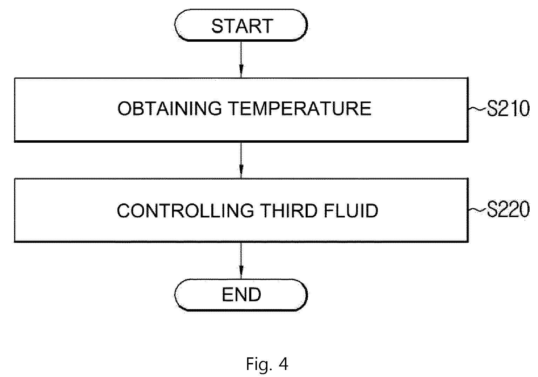

FIG. 4 shows a flow chart of a second control method of the present hybrid heat pump system. The second method may proceed with an operation S210 where the controller obtains a temperature of the air entered into the air heater 250. When the temperature of the air entered into the air heater 250 is below the predetermined temperature, the controller is configured to operate the air heater 250. When the air heater 250 operates, the controller is configured to control a flow rate of the third fluid to be flowed into the air heater 250 in an operation S220. The controller is configured to control the flow rate of the third fluid to be flowed into the air heater 250 such that the heat supply of the air source heat pump system 200 meets the determined required heat level of the load.

A non-transitory computer readable storage medium having stored thereon computer program instructions which sequentially perform the first and/or second control method of the present hybrid heat pump system according to exemplary embodiments may be provided.

As an example, a non-transitory computer readable storage medium having stored thereon computer program instructions which perform the operations S110 to S1230 and S210 and S220 may be provided.

The non-transitory computer readable storage medium refers to a medium where data can be stored semi-permanently and is readable by a device, and not a medium which stores data for a short period of time such as a register, cache, and memory etc. More specifically, the aforementioned various applications or programs may be stored in and provided by non-transitory computer readable medium such as a CD, DVD, hard disk, blue ray disk, USB, memory card, and ROM etc.

In one or more exemplary embodiments, the methods may be recorded, stored, or fixed in one or more non-transitory computer-readable media (computer readable storage (recording) media) that includes program instructions (computer readable instructions) to be implemented by a computer to cause one or more processors to execute (perform or implement) the program instructions. The media may also include, alone or in combination with the program instructions, data files, data structures, and the like. The media and program instructions may be those specially designed and constructed, or they may be of the kind well-known and available to those having skill in the computer software arts. Examples of non-transitory computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions may be executed by one or more processors. The described hardware devices may be configured to act as one or more software modules that are recorded, stored, or fixed in one or more non-transitory computer-readable media, in order to perform the operations and methods described above, or vice versa. In addition, a non-transitory computer-readable medium may be distributed among computer systems connected through a network and program instructions may be stored and executed in a decentralized manner. In addition, the computer-readable media may also be embodied in at least one application specific integrated circuit (ASIC) or Field Programmable Gate Array (FPGA).

Although a few exemplary embodiments have been shown and described, it would be appreciated by those skilled in the art that changes may be made in these exemplary embodiments without departing from the principles and spirit of the disclosure, the scope of which is defined in the claims and their equivalents.

## Claims

1. A hybrid heat pump system comprising:
a geothermal heat pump system configured to use a first fluid as a heat exchange medium thereof;
an air source heat pump system configured to use a second fluid as a heat exchange medium thereof;
a buffer heat-storage configured to exchange a heat with the geothermal heat pump system and the air source heat pump system and to store therein the exchanged heat, wherein the buffer heat-storage supplies a heat energy to a load; and
a controller configured to control the air source heat pump system based on a required heat level of the load,
wherein the geothermal heat pump system comprises:
a geothermal heat exchanger configured to collect a geothermal energy using a circulating water;
a geothermal heat pump apparatus configured to cool the first fluid using the collected geothermal energy from the geothermal heat exchanger;
first circulation lines fluid-coupled to and between the geothermal heat exchanger and the geothermal heat pump apparatus to realize a circulation of the circulating water between the geothermal heat exchanger and the geothermal heat pump apparatus; and
second circulation lines fluid-coupled to and between the geothermal heat pump apparatus and the buffer heat-storage to realize a circulation of the first fluid between the geothermal heat pump apparatus and the buffer heat-storage,
wherein the air source heat pump system comprises:
an air heater configured to heat an air from an outdoor and to output the heated air;
an air source heat pump apparatus configured to heat or cool the second fluid using the outputted heated air, wherein the air source heat pump apparatus is located in a closed indoor to suppress the air outputted threrefrom from returning thereto, wherein the air source heat pump apparatus has an air discharge unit fluid-coupled to the outdoor to discharge the air from the indoor to the outdoor,
third circulation lines fluid-coupled to and between the air source heat pump apparatus and the buffer heat-storage to realize a circulation of the second fluid between the air source heat pump apparatus and the buffer heat-storage; and
a control door configured to control the air flow between the indoor and the outdoor,
wherein the buffer heat-storage is configured to temporarily store therein the first fluid and the second fluid,
wherein the buffer heat-storage comprises fourth circulation lines fluid-coupled to and between the air heater and the buffer heat-storage to realize a circulation of a third fluid as a heat exchange medium between the air heater and the buffer heat-storage, wherein the third fluid receives a heat energy from the buffer heat-storage,
wherein the air heater is configured to heat the air from the outdoor using the third fluid,
wherein when the third fluid is circulating in and along the fourth circulation lines, the controller is configured to close the control door.

2. The hybrid heat pump system of claim 1, wherein the controller is configured to control a flow rate of the third fluid circulating in and along the fourth circulation lines, based on a temperature of the air entered into the air heater.

3. The hybrid heat pump system of claim 1, wherein the controller is configured to control the air heater when the air source heat pump apparatus operates.

4. The hybrid heat pump system of claim 1, wherein the fourth circulation lines is adjacent to the third circulation lines in order to suppress a freeze-burst of the fourth circulation lines.

5. The hybrid heat pump system of claim 1, wherein the air source heat pump apparatus is directly fluid-coupled to the air heater such that the air outputted from the air heater is not returned to the air heater but is fed to the air source heat pump apparatus.

6. A method for control the hybrid heat pump system of claim 1, wherein the method comprises:
determining, by the controller, a required heat level of the load;
controlling, by the controller, an operation of the geothermal heat pump system, based on the required heat level; and
controlling, by the controller, a heat level to be supplied from the air source heat pump system to the load, based on the required heat level.

7. The method of claim 6, wherein the (c) operation comprises:
obtaining, by the controller, a temperature of the air entered into the air heater; and
controlling a flow rate of the third fluid circulating in and along the fourth circulation lines, based on the temperature.
